# EUROPEAN PATENT APPLICATION

(11) **EP 4 478 786 A1**
(43) Date of publication of application: **18.12.2024**
(21) Application number: 23752872.4
(22) Date of filing: 07.02.2023
(51) Int. Cl.: H04W 36/38, H04W 36/04, H04W 72/23

(54) **COMMUNICATION METHOD, USER DEVICE, AND BASE STATION**

(30) Priority: 08.02.2022 JP 2022018265
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/004033
(87) International publication number: WO 2023/153408

(57) **Abstract**

A communication method used in a mobile communication system includes a step S105 of receiving, by a UE 100, a handover command from a first cell, the handover command including downlink control information (DCI) defined in a physical layer or a medium access control (MAC) control element (CE) defined in a MAC layer, and a step S106 of performing, by the UE 100, handover to change a serving cell from the first cell to a second cell in response to receiving the handover command.

## Description

### TECHNICAL FIELD

The present disclosure relates to a communication method, a user equipment, and a base station used in a mobile communication system.

### BACKGROUND

In mobile communication systems, a user equipment changes a serving cell when moving from a coverage area of one cell to another cell. The change of the serving cell (i.e., handover) is generally triggered by a layer 3 (L3) measurement and controlled by L3 signaling (specifically, radio resource control (RRC) signaling) for changing the serving cell.

In the Third Generation Partnership Project (3GPP), which is a standardization project for the mobile communication systems, a study is underway to enable a serving cell to be changed by controlling a lower layer than the layer 3 in order to mitigate latency and communication interruption in an existing handover (referred to as "legacy handover" as appropriate) by the L3.

### CITATION LIST

### NON-PATENT LITERATURE

Non-Patent Document 1: 3GPP Contribution "RP-213565"

### SUMMARY

In a first aspect, a communication method is used in a mobile communication system. The communication method includes receiving, by a user equipment, a handover command from a first cell, the handover command including downlink control information (DCI) defined in a physical layer or a medium access control (MAC) control element (CE) defined in a MAC layer, and performing, by the user equipment, handover to change a serving cell of the user equipment from the first cell to a second cell in response to receiving the handover command.

In a second aspect, a user equipment is used in a mobile communication system. The user equipment includes a receiver configured to receive a handover command from a first cell, the handover command including downlink control information (DCI) defined in a physical layer or a medium access control (MAC) control element (CE) defined in a MAC layer, and a controller configured to control handover to be performed, the handover being for changing a serving cell of the user equipment from the first cell to a second cell in response to receiving the handover command.

In a third aspect, a base station is used in a mobile communication system. The base station includes a transmitter configured to transmit a handover command to a user equipment via a first cell, the handover command including downlink control information (DCI) defined in a physical layer or a medium access control (MAC) control element (CE) defined in a MAC layer, and the handover command being for changing a serving cell of the user equipment from the first cell to a second cell.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a management scenario of the gNB according to an embodiment.
FIG. 7 is a diagram illustrating an overview of L1/L2 mobility according to an embodiment.
FIG. 8 is a diagram illustrating an overview of L1/L2 mobility according to an embodiment.
FIG. 9 is a diagram illustrating an operation example of the mobile communication system according to an embodiment.
FIG. 10 is a diagram illustrating an example of an operation of a first variation.
FIG. 11 is a diagram illustrating an example of a conditional reconfiguration according to the first variation.
FIG. 12 is a diagram illustrating a management scenario of the gNB according to the second variation.
FIG. 13 is a diagram illustrating an example of an operation of a second variation.
FIG. 14 is a diagram illustrating an example of an operation of a third variation.
FIG. 15 is a diagram illustrating a management scenario of the gNB according to a fourth variation.
FIG. 16 is a diagram illustrating an example of an operation of the fourth variation.

### DESCRIPTION OF EMBODIMENTS

The present disclosure is to enable a serving cell to be changed by control in a lower layer.

A mobile communication system according to an embodiment is described with reference to the drawings. In the description of the drawings, the same or similar parts are denoted by the same or similar reference signs.

### Configuration of Mobile Communication System

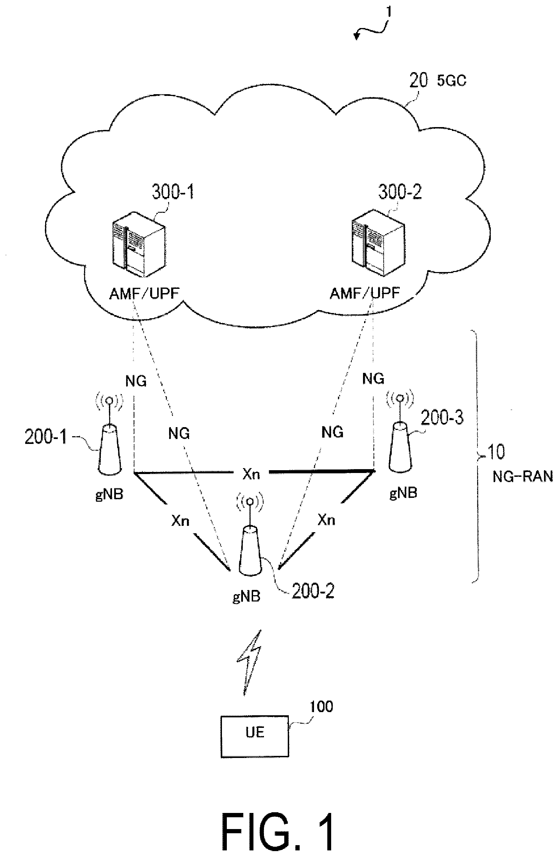

First, a configuration of a mobile communication system according to an embodiment is described. FIG. 1 is a diagram illustrating a configuration of a mobile communication system according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

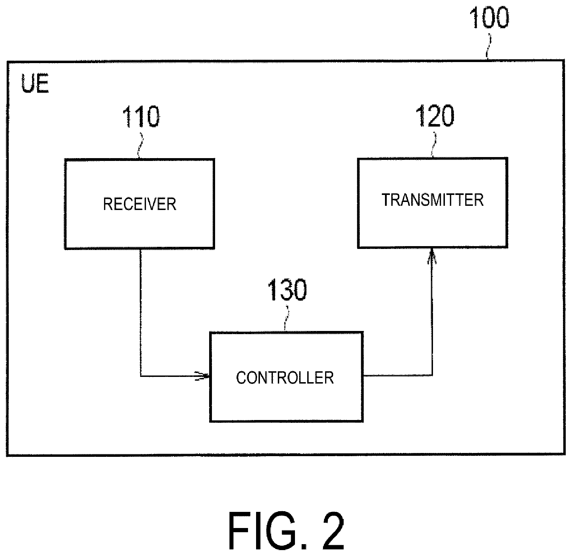

FIG. 2 is a diagram illustrating a configuration of the UE 100 (user equipment) to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

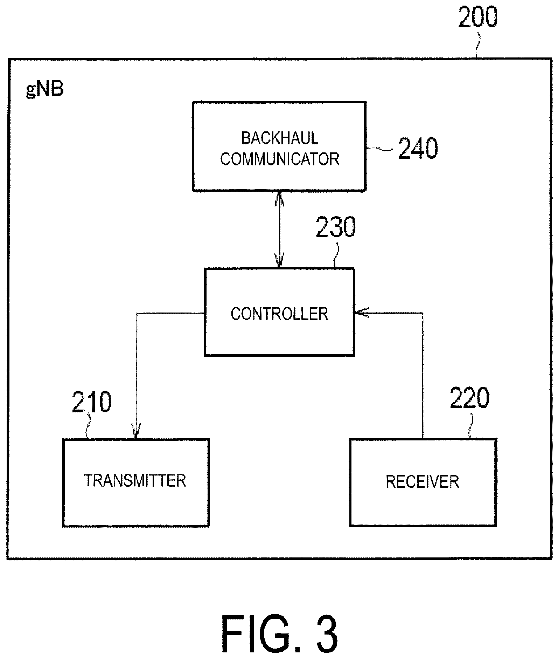

FIG. 3 is a diagram illustrating a configuration of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMP/UPF 300 via a NG interface between a base station and the core network. Note that the gNB 200 may include a central unit (CU) and a distributed unit (DU) (i.e., functions are divided), and the two units may be connected via an F1 interface, which is a fronthaul interface.

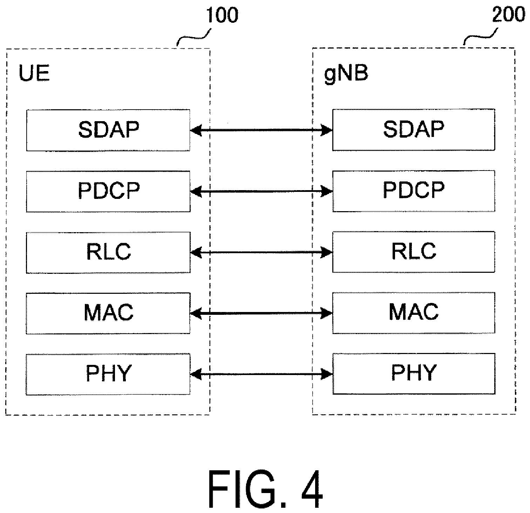

FIG. 4 is a diagram illustrating a configuration of a protocol stack of a radio interface of a user plane handling data.

A radio interface protocol of the user plane includes a physical (PHY) layer, a medium access control (MAC) layer, a radio link control (RLC) layer, a packet data convergence protocol (PDCP) layer, and a service data adaptation protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

In the NR, the UE 100 may use a bandwidth that is narrower than a system bandwidth (i.e., a bandwidth of the cell). The gNB 200 configures a bandwidth part (BWP) consisting of consecutive PRBs for the UE 100. The UE 100 transmits and receives data and control signals in an active BWP. For example, up to four BWPs may be configurable for the UE 100. Each BWP may have a different subcarrier spacing. The frequencies of the BWPs may overlap with each other. When a plurality of BWPs are configured for the UE 100, the gNB 200 can designate which BWP to activate by control in the downlink. By doing so, the gNB 200 dynamically adjusts the UE bandwidth according to an amount of data traffic in the UE 100 or the like to reduce the UE power consumption.

The gNB 200 can configure, for example, up to three control resource sets (CORESETs) for each of up to four BWPs on the serving cell. The CORESET is a radio resource for control information to be received by the UE 100. Up to 12 or more CORESETs may be configured for the UE 100 on the serving cell. Each CORESET may have an index of 0 to 11 or more. A CORESET may include 6 resource blocks (PRBs) and one, two or three consecutive OFDM symbols in the time domain.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an access stratum (AS). Note that, when the RAN is connected to the EPC, the SDAP need not be provided.

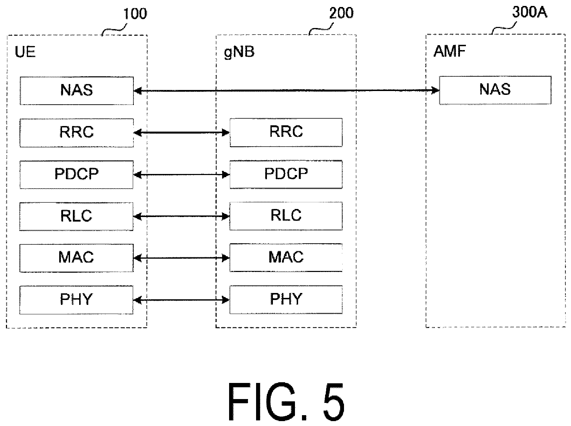

FIG. 5 is a diagram illustrating a configuration of a protocol stack of a radio interface of a control plane handling signaling (a control signal).

The protocol stack of the radio interface of the control plane includes a radio resource control (RRC) layer and a non-access stratum (NAS) instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS which is positioned upper than the RRC layer performs session management, mobility management, and the like. NAS signaling is transmitted between the NAS of the UE 100 and the NAS of the AMF 300A. Note that the UE 100 includes an application layer other than the protocol of the radio interface. A layer lower than the NAS is referred to as Access Stratum (AS).

### Overview of L1/L2 Mobility

An overview of layer 1 or layer 2 (L1/L2) mobility is described according to an embodiment. The layer 1 refers to the PHY layer. Although the layer 2 refers to each layer of the MAC, RLC, PDCP, and SDAP, an example is mainly described below in which the layer 2 is the MAC layer.

In the mobile communication system 1, the UE 100, when migrating from a coverage area of one cell to another cell, changes a serving cell. Conventionally, the serving cell change (i.e. handover) is triggered by a layer 3 (L3) measurement and controlled by L3 signaling (specifically, RRC signaling) for changing the serving cell.

The embodiment enables the serving cell to be changed by control of a layer lower than the layer 3 in order to reduce delay and communication interruption in conventional handover (referred to as "legacy handover" as appropriate) by the L3. For example, communication of the UE 100 is switched between the cells by beam control between the UE 100 and each cell. Such beam control is mainly performed by the lower layers, in particular, the PHY layer and the MAC layer.

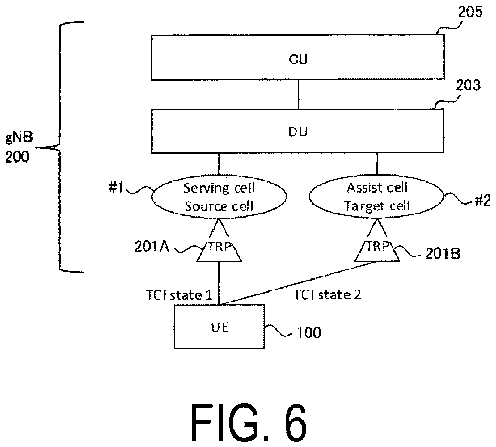

FIG. 6 is a diagram illustrating a management scenario of the gNB 200 according to the embodiment.

In the embodiment, multiple transmission/reception points (TRPs) 201 are used as an extension of the multi-input multi-output (MIMO) technology. Each TRP 201 may be a physical antenna array of the gNB 200. Hereinafter, an example is mainly described in which the gNB 200 has two TRPs 201 (TRP 201A and 201B), but the gNB 200 may have three or more TRPs 201.

In the embodiment, the gNB 200 is functionally divided into a DU 203 and a CU 205. The DU 203 and the CU 205 are connected to each other via the fronthaul interface. The DU 203 is a unit handling the lower layers including the PHY layer and the MAC layer. Specifically, the lower layers may include the RLC layer, the MAC layer, and the PHY layer. The DU 203 is connected to the TRPs 201A and 201B. The CU 205 is a unit handling higher layers including the RRC layer. The higher layers may include the RRC layer, the SDAP layer, and the PDCP layer. Hereinafter, an example is mainly described in which the gNB 200 is functionally divided into the DU 203 and the CU 205, but the gNB 200 may not need to be functionally divided into the DU 203 and the CU 205.

The TRP 201A and the TRP 201B are distributedly arranged to form respective cells different from each other. Specifically, the TRP 201A forms a cell #1, and the TRP 201B forms a cell #2. Here, "#1" and "#2" each mean a cell identifier (ID), for example, a physical cell identifier (PCI). That is, the cell #1 and the cell #2 have different cell IDs. The cell #1 and the cell #2 may belong to the same frequency. A coverage of the cell #1 and a coverage of the cell #2 may at least partially overlap.

The DU 203 controls the TRP 201A and the TRP 201B. That is, the TRP 201A and the TRP 201B are subordinate to the same DU 203. The CU 205 controls the DU 203. The CU 205 is connected to the core network (5GC 20) via an NG interface which is a backhaul interface.

The UE 100, which is in the RRC connected state in the cell #1, performs wireless communication with the gNB 200. The NR is capable of wide-band transmission via a high frequency band such as a millimeter-wave band. In order to compensate for radio wave attenuation in radio waves in such a high frequency band, beam forming is used between the gNB 200 and the UE 100 to obtain a high beam gain. The gNB 200 and the UE 100 establish a beam pair.

The UE 100 performs data communication with the cell #1 (TRP 201A) that is the serving cell. Specifically, the UE 100 performs the data transmission with the cell #1 using a beam corresponding to a transmission configuration indicator (TCI) state 1. In addition to the cell #1, the cell #2 that is a non-serving cell is configured for the UE 100. For example, for the UE 100, an SS/PBCH Block (SSB) for performing beam measurement for the cell #2 and a radio resource for performing data transmission with the cell #2 are configured from the cell #1.

Note that the SSB includes a primary synchronization signal (PSS), a secondary synchronization signal (SSS), a Physical Broadcast Channel (PBCH), and a demodulation reference signal (DMRS). For example, the SSB may include four OFDM symbols that are consecutive in the time domain. The SSB may include 240 subcarriers (i.e., 20 resource blocks) that are consecutive in the frequency domain. The PBCH is a physical channel that carries a master information block (MIB).

For the UE 100, the TCI state 1 is configured and activated for communication with the cell #1 (TRP 201A) that is the serving cell, and a beam used for communication with the cell #1 (TRP 201A) is controlled by the TCI state 1. The UE 100 reports a result of the beam measurement for the cell #2 to the cell #1. The gNB 200 (DU 203) receives the beam measurement result from the UE 100 in the cell #1, and activates a TCI state 2 corresponding to the beam of the cell #2 based on the beam measurement result. Note that a cell other than the serving cell and for which the TCI state is configured (or activated) may be referred to as an assist cell.

Here, beamforming in the NR is described. In order to perform a multi-beam operation in the PDCCH, the NR uses a TCI state configuration that is a higher layer configuration for beamforming for each CORESET. When the UE 100 monitors a PDCCH search space associated with the CORESET, the UE 100 receives the PDCCH in the CORESET based on the TCI state configuration configured for the CORESET. Beam information for the PDCCH reception is recognized by the UE 100 by way of a quasi-co-location (QCL) relation between a downlink reference signal and a PDCCH demodulation reference signal (DMRS). The PDCCH DMRS is quasi-co-located with the downlink reference signal by QCL-TypeA and/or QCL-TypeD. The QCL-TypeA corresponds to channel statistical properties observed on the UE 100 side, such as Doppler-shift, Doppler-spread, average delay, and delay spread. The QCL-TypeD corresponds to reception beam information on the UE 100 side. For the QCL-TypeD, an assumption may be made that a spatial reception parameter is the same between the downlink reference signal and the PDCCH DMRS. When the PDCCH DMRS is quasi-co-located with the downlink reference signal of QCL-TypeD, the PDCCH can be received using the same spatial reception parameter as that used by the UE 100 to receive the downlink reference signal with beamforming.

For example, the gNB 200 configures one or more TCI states for each of the PDCCH and the PDSCH through RRC signaling. Each TCI state configuration includes, for example, a TCI state ID, a cell ID, a BWP ID, a parameter related to a downlink reference signal resource, and a QCL-Type. The gNB 200 may activate any of the TCI states configured for the UE 100 using the activation command by the MAC CE.

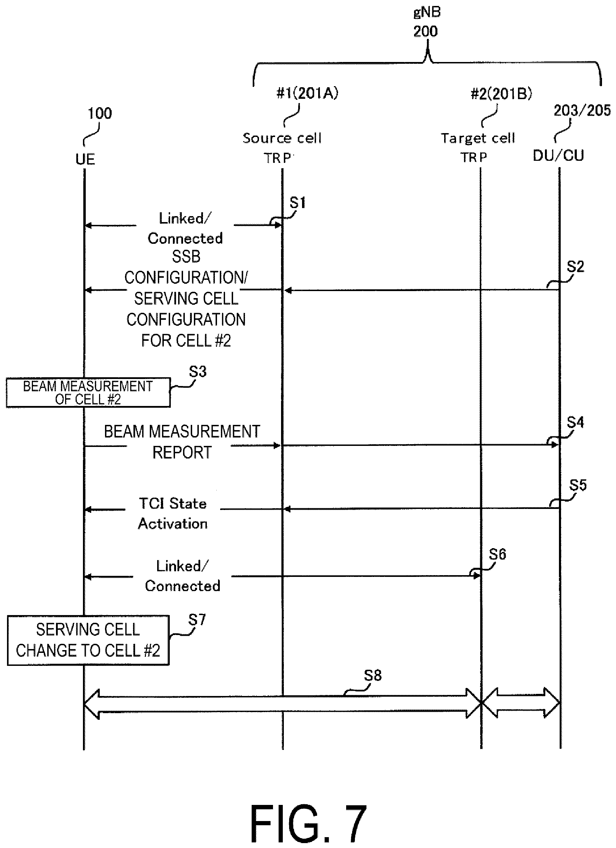

FIG. 7 is a diagram illustrating an overview of L1/L2 mobility according to the embodiment.

In step S1, for the UE 100, the TCI state 1 is configured and activated for communication with the cell #1 (TRP 201A), and a beam used for communication with the cell #1 (TRP 201A) is controlled by the TCI state 1. The state in which the TCI state with the cell is activated may be referred to as a state linked to the cell or a state connected to the cell.

In step S2, the CU 205 transmits configuration information to the UE 100 via the cell #1 (TRP 201A) through RRC signaling. The configuration information may include a configuration of an SSB used for beam measurement for the cell #2 (TRP 201B) and a configuration necessary for using a radio resource for data transmission and reception (including data transmission and reception to and from the cell #2). The UE 100 receives the configuration information from the cell #1 (TRP 201A).

In step S3, the UE 100 performs beam measurement for the cell #2 (TRP 201B) using the configuration information (in particular, the SSB configuration) received in step S1.

In step S4, the UE 100 transmits a report including the beam measurement result to the cell #1 (TRP 201A). The DU 203 receives the beam measurement result via the cell #1 (TRP 201A).

In step S5, based on the beam measurement result received in step S2, the DU 203 transmits an indication for activating the TCI state associated with the cell #2 (TRP 201B) to the UE 100 via the cell #1 (TRP 201A). Such an activation indication is performed through signaling of the layer 1 (PHY layer) and the layer 2 (MAC layer of the like). In response to receiving the activation indication from the cell #1, the UE 100 activates the TCI state associated with the cell #2 (TRP 201B). As a result, a beam pair between the UE 100 and the cell #2 (TRP 201B) is established (step S6).

In step S7, the UE 100 changes the serving cell of the UE 100 from the cell #1 to the cell #2. That is, handover of the UE 100 is performed from the cell #1 (source cell) to the cell #2 (target cell). As a result, the cell #2 is a new serving cell.

In step S8, the UE 100 transmits and receives information to and from the cell #2 (TRP 201B) using a UE-dedicated channel on the cell #2 (TRP 201B). The DU 203 transmits and receives data to and from the UE 100 via the cell #2 (TRP 201B).

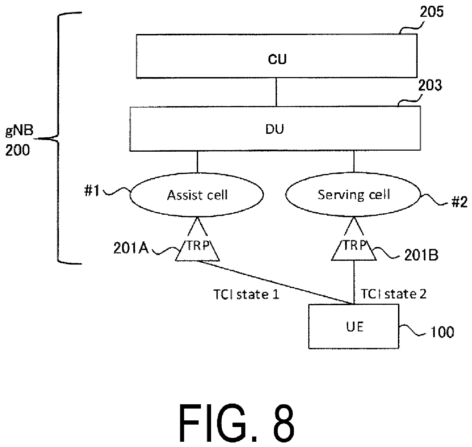

According to such an operation, as illustrated in FIG. 8, the UE 100 can perform seamless handover from the cell #1 (TRP 201A) to the cell #2 (TRP 201B) by beam management in the layer 1 (PHY layer) and the layer 2 (MAC layer or the like) without depending on a switching indication from the higher layer (particularly, RRC layer). Hereinafter, such handover is referred to as "L1/L2 handover" as appropriate.

Here, in order to minimize the communication interruption at the time of the handover, the UE 100 preferably continues to use, without change, the TCI state of the cell (TRP 201) with which the link is currently established before and after the handover.

The UE 100 may be configured with parameters such as s cell ID (PCI), a TCI state, and a cell radio network temporary identifier (C-RNTI) for each cell. However, since a plurality of TCI states can be configured for the UE 100, correspondence between these configuration parameters may be unclear. Which cell is the current serving cell may be also unclear for the UE 100. Furthermore, which configuration parameter group is to continue to be used may be also unclear for the UE 100.

### Operation of Mobile Communication System

In the embodiment, an operation of the mobile communication system is described. This operation may be an operation on the assumption of the overview of the above-described L1/L2 mobility.

In the embodiment, the UE 100 receives a handover command (hereinafter referred to as a "L1/L2 handover command") from a first cell, the handover command including downlink control information (DCI) defined in the PHY layer or a medium access control (MAC) control element (CE) defined in the MAC layer. The UE 100 performs handover (L1/L2 handover) to change a serving cell of the UE 100 from the first cell to a second cell in response to receiving the handover command. Thus, the handover can be explicitly indicated to the UE 100 through L1/L2 signaling.

In the embodiment, the L1/L2 handover command may include a cell ID of the second cell and/or a C-RNTI to be used for communication with the second cell. This allows the UE 100 to clearly specify the target cell of the L1/L2 handover. The L1/L2 handover command may include information for specifying whether to continue to use the TCI state having been used for communication with the first cell after the handover.

In the embodiment, the UE 100 receives configuration information from the first cell before receiving the L1/L2 handover command, the configuration information configuring a TCI state to be used for communication with the second cell. The configuration information may include at least one selected from the group consisting of information associating a cell identifier of the second cell with the TCI state, information associating a cell radio network temporary identifier (C-RNTI) to be used for communication with the second cell with the TCI state, and information indicating that the TCI state is to be used for communication with a target cell of the handover. This allows the UE 100 to clearly grasp the correspondence between the configuration parameters for the second cell (target cell).

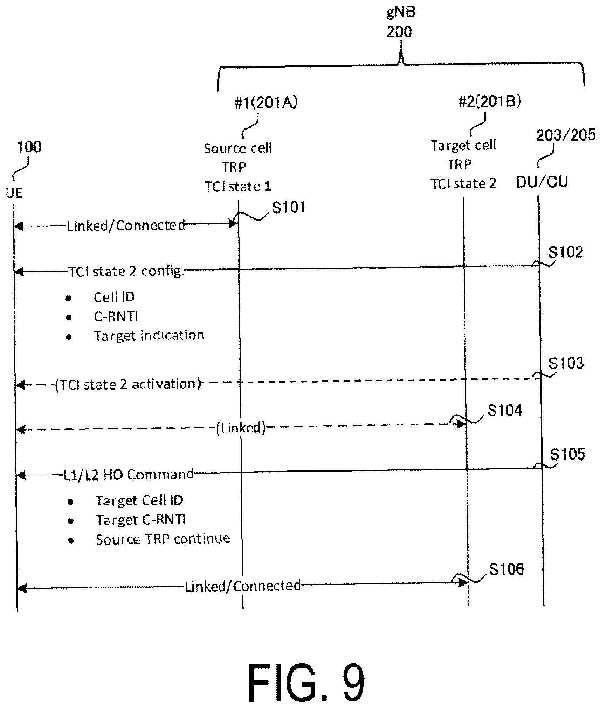

FIG. 9 is a diagram illustrating an operation example of the mobile communication system according to the embodiment. This operation example may be performed appropriately in combination with the operation in the overview of the above-described L1/L2 mobility.

In step S101, the UE 100 is in communication with the cell #1 (TRP 201A). At this stage, the gNB 200 may configure for or indicate to the UE 100 whether to continue to use the TCI state (TCI state 1) with the cell #1 (TRP 201A) even after the L1/L2 handover. Alternatively, such a configuration or indication may be made in step S102 or S105 described below.

In step S102, the gNB 200 (e.g., CU 205) transmits, to the UE 100, the configuration information including a TCI state configuration (TCI state 2 config.) configuring a TCI state (TCI state 2) to be used for communication with the cell #2 (TRP 201B). For example, the gNB 200 (CU 205) transmits the configuration information to the UE 100 via the cell #1 (TRP 201A) through RRC signaling. The UE 100 receives the configuration information from the cell #1 (TRP 201A) of the gNB 200.

The configuration information (TCI state 2 config.) may include association information between the TCI state configuration (TCI state 2 config.) and the cell ID of the cell #2. The configuration information may include one or more sets of a TCI state configuration and a cell ID. The UE 100 may be notified of such association information in step S105 described later.

The configuration information (TCI state 2 config.) may include association information between the TCI state configuration (TCI state 2 config.) and the C-RNTI for the cell #2. The configuration information may include one or more sets of a TCI state configuration and a C-RNTI. The UE 100 may be notified of such association information in step S105 described later.

The configuration information (TCI state 2 config.) may include information (Target Indication) indicating that the TCI state configuration (TCI state 2 config.) is for the target cell of the L1/L2 handover, that is, information indicating that the TCI state continues to be used even after the handover. The UE 100 may be notified of such information (Target Indication) in step S105 described later.

In step S103, the gNB 200 (e.g., DU 203) may transmit an activation indication (TCI state 2 activation) for activating the TCI state configuration (TCI state 2 config.) configured in step S102 to the UE 100 via the cell #1 (TRP 201A). The activation indication may be a MAC CE. The activation indication may include an identifier (TCI state ID) of the TCI state configuration (TCI state 2 config.). In response receiving the activation indication from the cell #1 (TRP 201A), the UE 100 activates the TCI state (TCI state 2) (step S104). In this case, the UE 100 is in a state capable of communicating with both the cell #1 (TRP 201A) and the cell #2 (TRP 201B).

In step S105, the gNB 200 (e.g., DU 203) transmits an L1/L2 handover command to the UE 100 via the cell #1 (TRP 201A). The UE 100 receives the L1/L2 handover command from the cell #1 (TRP 201A). The L1/L2 handover command is a MAC CE or DCI. The L1/L2 handover command may optionally be an RRC message.

The L1/L2 handover command may include at least one selected from the group consisting of the cell ID of the target cell (cell #2/TRP 201B), the C-RNTI used for the target cell (cell #2/TRP 201B), and the ID of the TCI state used for the target cell (cell #2/TRP 201B). The L1/L2 handover command may include information (Source TRP continue) indicating whether to continue to use the TCI state of the source cell (cell #1/TRP 201A).

In step S106, the UE 100 performs the L1/L2 handover to switch the serving cell from the cell #1 (TRP 201A) to the cell #2 (TRP 201B) in response to receiving the L1/L2 handover command from the cell #1 (TRP 201A).

When the L1/L2 handover command includes a cell ID, the UE 100 may regard the cell ID as that of the current serving cell. When the L1/L2 handover command includes an ID of the TCI state, the UE 100 may regard a cell ID associated with the ID of the TCI state as that of the serving cell.

When the L1/L2 handover command includes a C-RNTI, the UE 100 may use the C-RNTI for communication with the serving cell. For example, the UE 100 may regard the C-RNTI as an identifier of the UE 100 in the serving cell. Alternatively, when the L1/L2 handover command includes a cell ID, the UE 100 may use a C-RNTI associated with the cell ID for communication with the serving cell.

The UE 100 may activate the TCI state associated with cell #2 (TRP 201B) in response to receiving the L1/L2 handover command.

The UE 100, when continuing to use the TCI state of the source cell (cell #1/TRP 201A), may manage the C-RNTI of the source cell (cell #1/TRP 201A) in association with the TCI state configuration of the source cell (cell #1/TRP 201A). The UE 100 may maintain the TCI state associated with the source cell (cell #1/TRP 201A) in the active state (i.e., not deactivate the TCI state).

This operation example mainly describes the example in which the UE 100 performs the operation to maintain the TCI state of the source cell and/or the target cell in the active state in accordance with the configuration or indication from the gNB 200. However, regardless of the configuration or indication from the gNB 200, this operation may be always performed when the L1/L2 handover is performed.

Note that in step S106, the UE 100 may notify the gNB 200 (DU 203 or CU 205) of the completion of the L1/L2 handover via the target cell (cell #2/TRP 201B). The notification may be a MAC CE or RRC message. The gNB 200 (DU 203 or CU 205) recognizes from the notification that the UE 100 has completed the L1/L2 handover.

### First Variation

A first variation of the operation according to the above embodiment is described.

In the first variation, the UE 100 receives an RRC message including a conditional reconfiguration from the first cell before receiving the L1/L2 handover command, the conditional reconfiguration configuring a conditional handover (CHO) from the first cell (cell #1/TRP 201A) to the second cell (cell #2/TRP 201B). The RRC message includes condition information configuring the handover to be triggered by receiving the L1/L2 handover command and performed. In this way, in the first variation, the CHO that is a kind of L3 mobility is enabled to be triggered by L1/L2 signaling. This can realize an efficient L3 handover using L1/L2 signaling in combination.

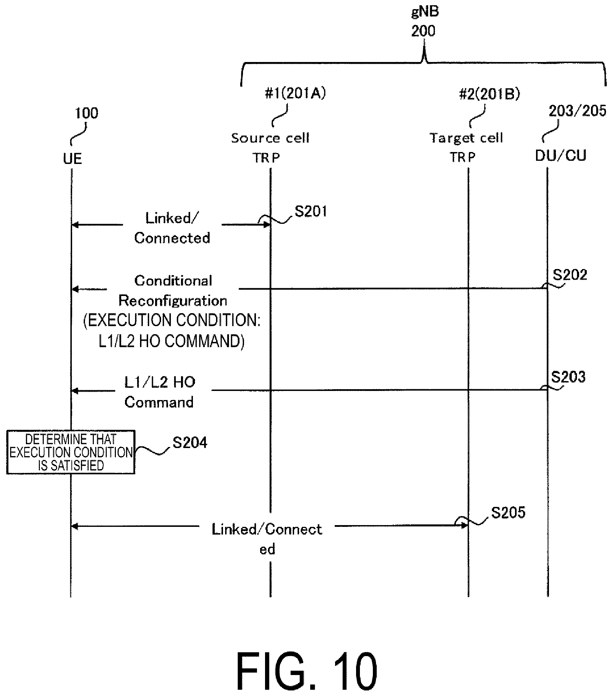

FIG. 10 is a diagram illustrating an example of an operation of the first variation. This operation example may be performed appropriately in combination with the operation described above.

In step S201, the UE 100 is in communication with the cell #1 (TRP 201A).

In step S202, the gNB 200 (e.g., CU 205) configures the CHO for the UE 100 via cell #1 (TRP 201A). The CHO is for configuring an execution condition triggering the L3 handover for the UE 100 in advance to perform the handover when the configured execution condition is satisfied in the UE 100.

Specifically, the gNB 200 (CU 205) transmits an RRC Reconfiguration message including the conditional reconfiguration that is a CHO configuration to the UE 100. The CHO configuration includes, for example, the configuration information used for communication with the cell #2 (TRP 201B) and the condition information indicating the execution condition for the L3 handover. The candidate cell configuration and the execution condition are associated with each other. Different execution conditions may be associated with a plurality of cells.

The execution condition is generally information for configuring the radio quality of a measurement target, a threshold value to be compared with the radio quality, and the like. In the embodiment, the execution condition is configured with reception of the L1/L2 signaling (L1/L2 handover command) as a condition. The UE 100 starts evaluating the execution condition.

In step S203, the gNB 200 (e.g., DU 203) transmits the L1/L2 handover command as described above to the UE 100 via the cell #1 (TRP 201A). In the first variation, the L1/L2 handover command may include an identifier indicating the conditional reconfiguration configured in step S202. Accordingly, even when a plurality of conditional reconfigurations are configured for the UE 100, the conditional reconfiguration (CHO) with the execution condition being L1/L2 signaling can be designated from among the plurality of conditional reconfigurations.

In step S204, the UE 100 determines that the execution condition for the CHO is satisfied in response to receiving the L1/L2 handover command, and starts access to the cell #2 (TRP 201B) in which the execution condition is satisfied. In this way, the gNB 200 can forcibly trigger (perform) the CHO using the L1/L2 handover command.

In step S205, in STEP 3, the UE 100, when succeeding in accessing the cell #2 (TRP 201B), changes the serving cell from the cell #1 (TRP 201A) to the cell #2 (TRP 201B). Thus, the L3 handover is completed. The UE 100 performs communication with the cell #2 (TRP 201B) using the configuration information of the cell #2 (TRP 201B) received in the STEP 1.

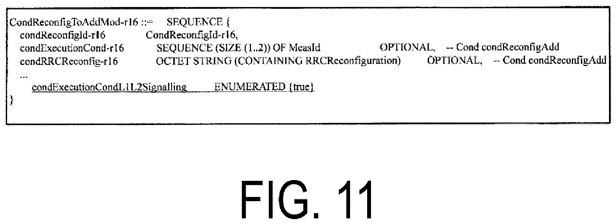

FIG. 11 is a diagram illustrating an example of the conditional reconfiguration according to the first variation.

The gNB 200 transmits an RRC message to the UE 100 including a conditional reconfiguration (CondReconfigToAddMod-r16) as illustrated in FIG. 11. The conditional reconfiguration (CondReconfigToAddMod-r16) includes "condReconfigId-r16" which is an ID of the conditional reconfiguration, "condExecutionCond-r16" which indicates an execution condition of the conditional reconfiguration, and "condRRCReconfig-r16" which includes content of the conditional reconfiguration (RRCReconfiguration). Furthermore, the conditional reconfiguration (CondReconfigToAddMod-r16) according to the first variation may include "condExecutionCondL1L2Signalling" which is condition information configuring the handover to be triggered by receiving the L1/L2 handover command and performed.

When "condExecutionCondLlL2Signalling" is set to "True", the UE 100 may ignore "condExecutionCond-r16". Alternatively, when "condExecutionCondL1L2Signalling" is set to "True", the UE 100 may evaluate (wait for) both execution conditions of "condExecutionCond-r16" and "condExecutionCondL1L2Signalling", and perform the L3 handover when one of the execution conditions is satisfied.

### Second Variation

A second variation of the operation according to the above embodiment is described.

The second variation is on the assumption that the gNB 200 is functionally divided into the DU 203 and the CU 205CU. As described above, when the L1/L2 handover command is the DCI or the MAC CE, the DU 203 generates the L1/L2 handover command. However, when the CU 205 is assumed to still have an authority to determine the handover, an L1/L2 handover command transmission indication needs to be indicated from the CU 205 to the DU 203. That is, in the second variation, the CU 205 indicates to the DU 203 transmission of the L1/L2 handover command. In response to the indication from the CU 205, the DU 203 transmits the L1/L2 handover command to the UE 100 via the first cell (cell #1/TRP 201A).

The DU 203 may transmit assistance information available for determining the handover to the CU 205. The CU 205 may determine the handover based on the assistance information and indicate to the DU 203 the transmission of the L1/L2 handover command.

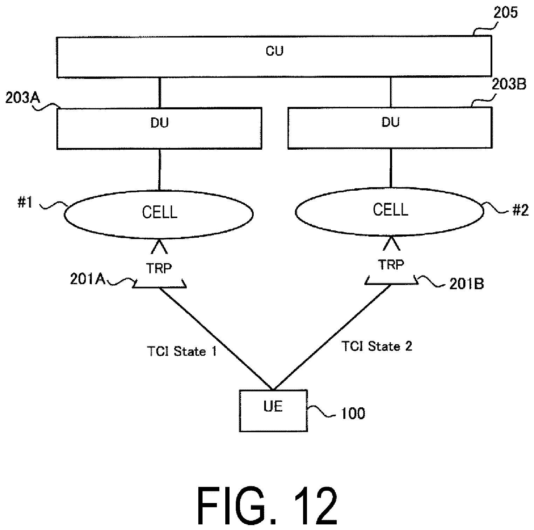

As illustrated in FIG. 12, the first cell (cell #1/TRP 201A) and the second cell (cell #2/TRP 201B) may be subordinate to different DUs 203. To be more specific, the first cell (cell #1/TRP 201A) may be managed by a DU 203A and the second cell (cell #2/TRP 201B) may be managed by a DU 203B. The DU 203A and the DU 203B are subordinate to the same CU 205. When the handover of the UE 100 is performed from the first cell (cell #1/TRP 201A) to the second cell (cell #2/TRP 201B), a source DU is the DU 203A and a target DU is the DU 203B. However, in the second variation, the first cell (cell #1/TRP 201A) and the second cell (cell #2/TRP 201B) may be subordinate to the same DU 203.

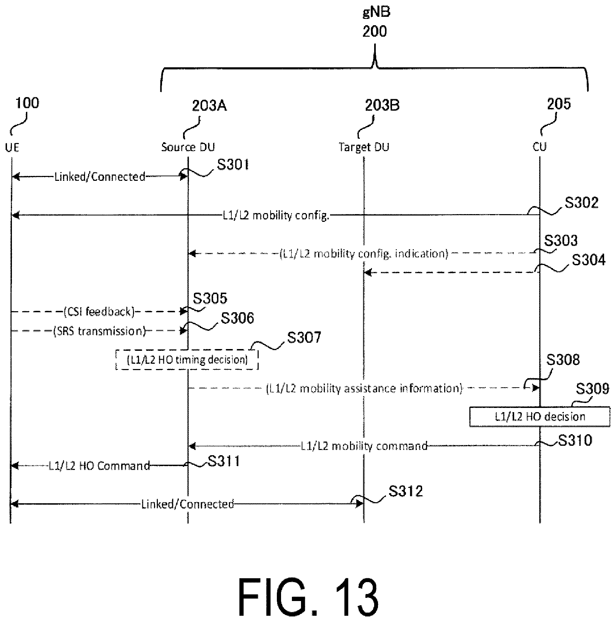

FIG. 13 is a diagram illustrating an example of an operation of the second variation. This operation example may be performed appropriately in combination with the operation described above. Note that communication between the DU 203 and the CU 205 is performed on a fronthaul interface (F1 interface).

In step S301, the UE 100 is in communication with the cell #1 (TRP 201A).

In step S302, the gNB 200 (e.g., CU 205) transmits the configuration information (L1/L2 mobility config.) as described above to the UE 100. The gNB 200 (CU 205) transmits the configuration information to the UE 100 via the cell #1 (TRP 201A) through RRC signaling. The UE 100 receives the configuration information from the cell #1 (TRP 201A) of the gNB 200.

In the steps S303 and S304, the CU 205 may notify the DU 203 (DU 203A and/or 203B) that the configuration (L1/L2 mobility configuration) has been configured for the UE 100. The CU 205 may configure reporting of the assistance information for the DU 203 (DU 203A and/or 203B).

In step S305, the UE 100 may perform channel state information (CSI) measurement in the cell #1 (TRP 201A) and transmit CSI feedback to the cell #1 (TRP 201A). The CSI is information indicating a channel state in the downlink and may be at least one selected from the group consisting of a Channel Quality Indicator (CQI), a Precoding Matrix Indicator (PMI), and a Rank Indicator (RI). The DU 203A receives the CSI feedback via the cell #1 (TRP 201A). When the TCI state associated with the cell #2 (TRP 201B) is activated, the UE 100 may further perform CSI measurement in the cell #2 (TRP 201B) and transmit CSI feedback to the cell #2 (TRP 201B). The DU 203B may receive the CSI feedback via the cell #2 (TRP 201B).

In step S306, the UE 100 may transmit a Sounding Reference Signal (SRS), which is a reference signal in the uplink, to the cell #1 (TRP 201A). The DU 203A may receive the SRS via the cell #1 (TRP 201A) and perform channel state measurement in the uplink. When the TCI state associated with the cell #2 (TRP 201B) is activated, the UE 100 may further transmit the SRS to the cell #2 (TRP 201B). The DU 203B may receive the SRS via the cell #2 (TRP 201B) and perform channel state measurement in the uplink.

Note that the DU 203A may measure the interfering power in addition to acquiring the channel state measurements in step S305 and/or step S306. In the same and/or similar way, the DU 203B may measure the interfering power in addition to acquiring the channel state measurements in step S305 and/or step S306.

In step S308, the DU 203A transmits assistance information (L1/L2 mobility assistance information) including these measurements to the CU 205. When the DU 203A determines the handover timing by itself (step S307) based on these measurements, the DU 203A may transmit assistance information (L1/L2 HO decision indication) to the CU 205. In the same and/or similar way, the DU 203B may transmit assistance information (L1/L2 mobility assistance information) including the measurements to the CU 205. When the DU 203B determines the handover timing by itself based on these measurements, the DU 203B may transmit assistance information (L1/L2 HO decision indication) to the CU 205.

In step S309, the CU 205 determines to perform the L1/L2 handover based on the assistance information from the DU 203A and/or the DU 203B and other information (e.g., an L3 measurement report from the UE 100).

In step S310, the CU 205 indicates to the DU 203A transmission of the L1/L2 handover command to the UE 100.

In step S311, the DU 203A transmits the L1/L2 handover command to the UE 100 via the cell #1 (TRP 201A) in response to receiving the indication (L1/L2 mobility command) from the CU 205. As described above, the DU 203A may generate a MAC CE for indicating the L1/L2 handover in the MAC layer and transmit the MAC CE to the UE 100. Alternatively, the DU 203A may generate DCI for indicating the L1/L2 handover in the PHY layer and transmit the DCI to the UE 100.

In step S312, the UE 100 changes the serving cell from the cell #1 (TRP 201A) to the cell #2 (TRP 201B) in response to receiving the L1/L2 handover command.

When the DU 203A transmits the L1/L2 handover command to the UE 100 or receives an acknowledgment responding to the transmission of the L1/L2 handover command from the UE 100, the DU 203A may transmit a notification to that effect to the CU 205. The CU 205 may transmit the notification to the DU 203B. That is, the CU 205 notifies the DU 203B that the DU 203A has transmitted the L1/L2 handover command.

### Third Variation

A third variation of the operation according to the above embodiment is described. The third variation is on the assumption that is the same as and/or similar to the second variation, but is an example assuming that the DU 203 is given the authority to determine the handover.

In the third variation, the CU 205 permits the DU 203 to determine the handover. In response to determining the handover based on the permission, the DU 203 transmits the handover command to the UE 100 via the first cell (cell #1/TRP 201A). This allows the DU 203A to determine the L1/L2 handover. In particular, when the L1/L2 handover is assumed to be determined based on the CSI feedback, the DU 203 determines the handover so that the quick handover determination can be made.

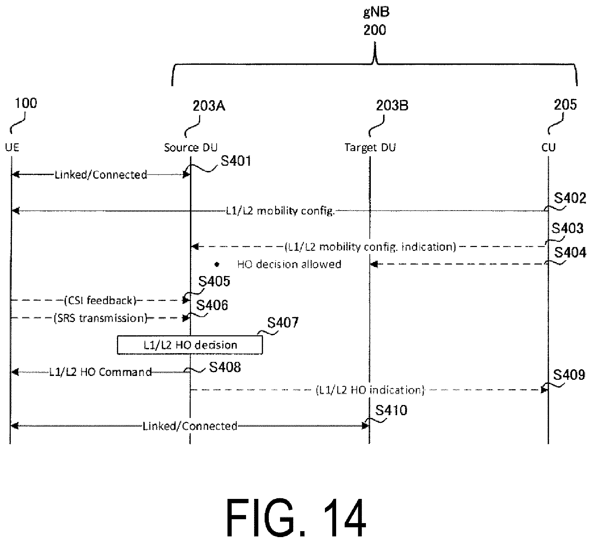

FIG. 14 is a diagram illustrating an example of an operation of the third variation. This operation example may be performed appropriately in combination with the operation described above. Note that communication between the DU 203 and the CU 205 is performed on a fronthaul interface (F1 interface).

In step S401, the UE 100 is in communication with the cell #1 (TRP 201A).

In step S402, the gNB 200 (e.g., CU 205) transmits the configuration information (L1/L2 mobility config.) as described above to the UE 100. The gNB 200 (CU 205) transmits the configuration information to the UE 100 via the cell #1 (TRP 201A) through RRC signaling. The UE 100 receives the configuration information from the cell #1 (TRP 201A) of the gNB 200.

In the steps S403 and S404, the CU 205 may notify the DU 203 (DU 203A and/or 203B) that the configuration (L1/L2 mobility configuration) has been configured for the UE 100. The CU 205 may configure reporting of the assistance information for the DU 203 (DU 203A and/or 203B). In the third variation, the CU 205 includes in the notification, permission information for permitting the DU 203 to perform the L1/L2 handover determination. When permitted, the DU 203 takes the initiative to determine the handover. On the other hand, when not permitted, the processing at the initiative of the CU 205 is performed as described in the second variation. Alternatively, the notification that the configuration has been configured in steps S403 and S404 may implicitly indicate that the handover determination is permitted. For a call, when the DU 203 receives the notification, the DU 203 takes the initiative to determine the handover.

In step S405, the UE 100 may perform CSI measurement in the cell #1 (TRP 201A) and transmit CSI feedback to the cell #1 (TRP 201A). The DU 203A receives the CSI feedback via the cell #1 (TRP 201A).

In step S406, the UE 100 may transmit an SRS to the cell #1 (TRP 201A). The DU 203A may receive the SRS via the cell #1 (TRP 201A) and perform channel state measurement in the uplink.

Note that the DU 203A may measure the interfering power in addition to acquiring the channel state measurements in step S405 and/or step S406.

In step S407, the DU 203A determines to perform the L1/L2 handover, based on these measurements.

In step S408, the DU 203A transmits the L1/L2 handover command to the UE 100 via the cell #1 (TRP 201A). As described above, the DU 203A may generate a MAC CE for indicating the L1/L2 handover in the MAC layer and transmit the MAC CE to the UE 100. Alternatively, the DU 203A may generate DCI for indicating the L1/L2 handover in the PHY layer and transmit the DCI to the UE 100.

In step S409, when the DU 203A transmits the L1/L2 handover command to the UE 100 or receives an acknowledgment responding to the transmission of the L1/L2 handover command from the UE 100, the DU 203A may transmit a notification to that effect to the CU 205.

In step S410, the UE 100 changes the serving cell from the cell #1 (TRP 201A) to the cell #2 (TRP 201B) in response to receiving the L1/L2 handover command.

### Fourth Variation

A fourth variation of the operation according to the above embodiment is described.

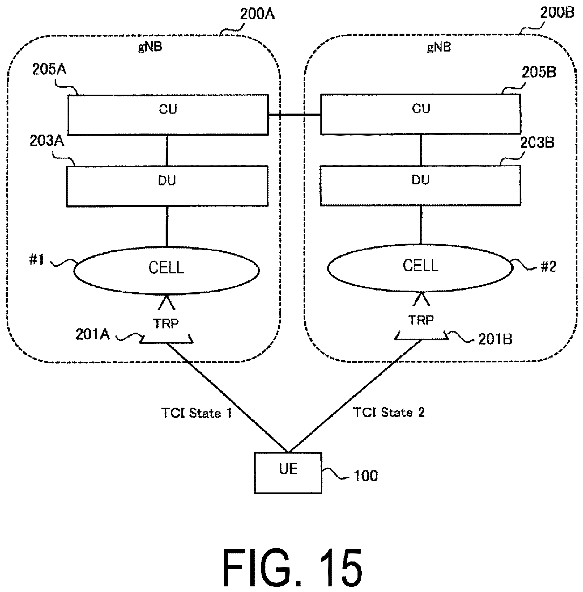

In the fourth variation, as illustrated in FIG. 15, assumed that the first cell (cell #1/TRP 201A) and the second cell (cell #2/TRP 201B) are subordinate to different gNBs 200. To be more specific, the first cell (cell #1/TRP 201A) is managed by a gNB 200A and the second cell (cell #2/TRP 201B) is managed by a gNB 200B. When the handover of the UE 100 is performed from the first cell (cell #1/TRP 201A) to the second cell (cell #2/TRP 201B), a source gNB is the gNB 200A and a target gNB is the gNB 200B. Communication between the gNB 200A and the gNB 200B is performed on an inter-base station interface (Xn interface).

In a typical inter-gNB handover, the source gNB 200A transmits a handover request to the target gNB 200B. The target gNB 200B transmits a response message including configuration information (RRCReconfiguration) of the target cell to the source gNB 200A in response to the handover request. Here, the behavior of the target gNB 200B (e.g., content of the generated RRCReconfiguration) is considered to be different between the legacy handover and the L1/L2 handover. Therefore, in the fourth variation, the source gNB 200A notifies the target gNB 200B whether to perform the legacy handover or the L1/L2 handover in the handover request. Specifically, for the L1/L2 handover, the source gNB 200A includes the L1/L2 handover indicator in the handover request.

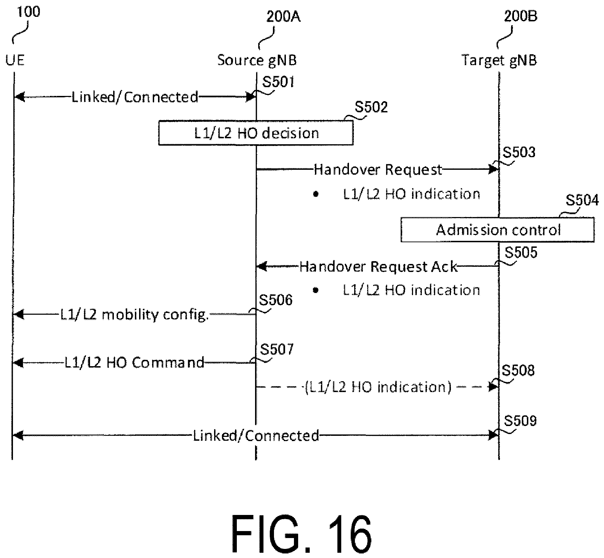

FIG. 16 is a diagram illustrating an example of an operation of the fourth variation. This operation example may be performed appropriately in combination with the operation described above.

In step S501, the UE 100 is in communication with the cell #1 (TRP 201A).

In step S502, the source gNB 200A determines to perform the L1/L2 handover on the UE 100.

In step S503, the source gNB 200A transmits a handover request (Xn message) including context information of the UE 100 to the target gNB 200B. This message includes information (L1/L2 HO Indication) indicating the L1/L2 handover. The information may be information indicating an mTRP configuration.

In step S504, the target gNB 200B determines to accept the handover request. The target gNB 200B may determine whether to perform the L1/L2 handover or the legacy handover and change the content of the generated RRC message (RRCReconfiguration) in accordance with the determination result.

In step S505, the target gNB 200B transmits a handover request Ack (Xn message) to the source gNB 200A. When the L1/L2 handover is performed, information (L1/L2 HO Indication) to that effect may be included in the message. When the legacy handover is performed, information to that effect may be included in the message.

In step S506, the source gNB 200A configures the L1/L2 mobility configuration for the UE 100. For example, the source gNB 200A may configure and activate the TCI state of the target cell. The L1/L2 mobility configuration may configured before the handover request in step S503.

In step S507, the source gNB 200A transmits an L1/L2 handover command to the UE 100. When the source gNB 200A transmits the L1/L2 handover command or receives an acknowledgment responding to the transmission of the L1/L2 handover command from the UE 100, the source gNB 200A may transmit a notification to the target gNB 200B (step S508). The target gNB 200B enables the UE context received in the handover request in step S503 (i.e. recognizes as the context of the currently serving UE 100).

In step S509, in response to receiving the L1/L2 handover command, the UE 100 changes the serving cell from the cell #1 (TRP 201A) to the cell #2 (TRP 201B), and recognizes the handover performed to the target gNB 200B (target cell).

Note that although this operation example assumes that the handover of the UE 100 is performed from the gNB 200A to the gNB 200B, the UE 100 may be assumed to perform communication using dual connectivity with the gNB 200A and the gNB 200B. In this case, one of the gNB 200A and the gNB 200B may be a master node (MN), and the other may be a secondary node (SN). The gNB 200A may transmit an SN addition request, an SN change request, or a new message (e.g., a TRP addition request or a TRP change request) including information indicating the L1/L2 handover (L1/L2 HO Indication) to the gNB 200B.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow.

In the embodiments described above, an example in which the base station is an NR base station (gNB) is described; however, the base station may be an LTE base station (eNB) or a 6G base station. The base station may be a relay node such as an Integrated Access and Backhaul (IAB) node. The base station may be a DU of the IAB node. The user equipment may be a Mobile Termination (MT) of the IAB node.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". The terms "include", "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2022-018265 (filed on February 8, 2022), the contents of which are incorporated herein by reference in their entirety.

### Supplementary Note

Features relating to the embodiments described above are described below as supplements.
(1) A communication method used in a mobile communication system, the communication method including: receiving, by a user equipment, a handover command from a first cell, the handover command including downlink control information (DCI) defined in a physical layer or a medium access control (MAC) control element (CE) defined in a MAC layer; and performing, by the user equipment, handover to change a serving cell of the user equipment from the first cell to a second cell in response to receiving the handover command.
(2) The communication method according to (1) above, wherein
   the handover command includes a cell identifier of the second cell and/or a cell radio network temporary identifier (C-RNTI) to be used for communication with the second cell.
(3) The communication method according to (1) or (2) above, further including:
   performing communication with the first cell by using a transmission configuration indicator (TCI) state,
   wherein the handover command includes information for specifying whether to continue to use the TCI state after the handover.
(4) The communication method according to any one of (1) to (3) above, further including: receiving, by the user equipment, configuration information from the first cell before receiving the handover command, the configuration information being for configuring a transmission configuration indicator (TCI) state to be used for communication with the second cell,
   wherein the configuration information includes at least one selected from the group consisting of information associating a cell identifier of the second cell with the TCI state, information associating a cell radio network temporary identifier (C-RNTI) to be used for communication with the second cell with the TCI state, and information indicating that the TCI state is to be used for communication with a target cell of the handover.
(5) The communication method according to any one of (1) to (4) above, further including:
   receiving, by the user equipment, a radio resource control (RRC) message comprising a conditional reconfiguration from the first cell before receiving the handover command, the conditional reconfiguration being for configuring a conditional handover from the first cell to the second cell,
   wherein the RRC message comprises condition information for configuring the handover to be triggered by the receiving of the handover command and performed.
(6) The communication method according to any one of (1) to (5) above, wherein the handover command includes an identifier indicating the conditional reconfiguration.
(7) The communication method according to any one of (1) to (6) above, further including:
   when a base station managing the first cell is divided into a central unit (CU) and a distributed unit (DU), the CU handling higher layers including a radio resource control (RRC) layer, and the DU handling lower layers including the physical layer and the MAC layer,
   indicating, by the CU to the DU, transmission of the handover command; and transmitting, by the DU to the user equipment, the handover command via the first cell in accordance with the indication from the CU.
(8) The communication method according to any one of (1) to (7) above, further including: transmitting, by the DU to the CU, assistance information available for determining the handover,
   wherein the indicating includes indicating, to the DU, transmission of the handover command in response to determining, by the CU, the handover based on the assistance information.
(9) The communication method according to any one of (1) to (8) above, further including: when a base station managing the first cell is divided into a central unit (CU) and a distributed unit (DU), the CU handling higher layers including a radio resource control (RRC) layer, and the DU handling lower layers including the physical layer and the MAC layer,
   permitting, by the CU, the DU to determine the handover; and
   transmitting, by the DU to the user equipment, the handover command via the first cell in response to determining the handover based on the permitting.
(10) The communication method according to any one of (1) to (9) above, further including: when a first base station manages the first cell and a second base station manages the second cell,
   a step of transmitting a handover request from the first base station to the second base station, wherein the handover request includes an L1/L2 handover indicator indicating the handover controlled in a layer 1 (L1) that is the physical layer and/or a layer 2 (L2) including the MAC layer.
(11) A user equipment used in a mobile communication system, including:
   a receiver configured to receive a handover command from a first cell, the handover command including downlink control information (DCI) defined in a physical layer or a medium access control (MAC) control element (CE) defined in a MAC layer; and
   a controller configured to control handover to be performed, the handover being for changing a serving cell of the user equipment from the first cell to a second cell in response to receiving the handover command.
(12) A base station used in a mobile communication system, including:
   a transmitter configured to transmit a handover command to a user equipment via a first cell, the handover command including downlink control information (DCI) defined in a physical layer or a medium access control (MAC) control element (CE) defined in a MAC layer, and the handover command being for changing a serving cell of the user equipment from the first cell to a second cell.

### REFERENCE SIGNS

1: Mobile communication system
100: UE
110: Receiver
120: Transmitter
130: Controller
200: gNB
201: TRP
203 : DU
205: CU
210: Transmitter
220: Receiver
230: Controller
240: Backhaul communicator

## Claims

1. A communication method used in a mobile communication system, the communication method comprising:
receiving, by a user equipment, a handover command from a first cell, the handover command comprising downlink control information (DCI) defined in a physical layer or a medium access control (MAC) control element (CE) defined in a MAC layer; and
performing, by the user equipment, handover to change a serving cell of the user equipment from the first cell to a second cell in response to receiving the handover command.

2. The communication method according to claim 1, wherein
the handover command comprises a cell identifier of the second cell and/or a cell radio network temporary identifier (C-RNTI) to be used for communication with the second cell.

3. The communication method according to claim 1 or 2, further comprising:
performing communication with the first cell by using a transmission configuration indicator (TCI) state,
wherein the handover command comprises information for specifying whether to continue to use the TCI state after the handover.

4. The communication method according to claim 1 or 2, further comprising:
receiving, by the user equipment, configuration information from the first cell before receiving the handover command, the configuration information being for configuring a transmission configuration indicator (TCI) state to be used for communication with the second cell,
wherein the configuration information comprises at least one selected from the group consisting of information associating a cell identifier of the second cell with the TCI state, information associating a cell radio network temporary identifier (C-RNTI) to be used for communication with the second cell with the TCI state, and information indicating that the TCI state is to be used for communication with a target cell of the handover.

5. The communication method according to claim 1, further comprising:
receiving, by the user equipment, a radio resource control (RRC) message comprising a conditional reconfiguration from the first cell before receiving the handover command, the conditional reconfiguration being for configuring a conditional handover from the first cell to the second cell,
wherein the RRC message comprises condition information for configuring the handover to be triggered by the receiving of the handover command and performed.

6. The communication method according to claim 5, wherein
the handover command comprises an identifier indicating the conditional reconfiguration.

7. The communication method according to claim 1, further comprising:
when a base station managing the first cell is divided into a central unit (CU) and a distributed unit (DU), the CU handling higher layers comprising a radio resource control (RRC) layer, and the DU handling lower layers comprising the physical layer and the MAC layer,
indicating, by the CU to the DU, transmission of the handover command; and
transmitting, by the DU to the user equipment, the handover command via the first cell in accordance with the indication from the CU.

8. The communication method according to claim 7, further comprising:
transmitting, by the DU to the CU, assistance information available for determining the handover,
wherein the indicating comprises indicating, to the DU, transmission of the handover command in response to determining, by the CU, the handover based on the assistance information.

9. The communication method according to claim 1, further comprising:
when a base station managing the first cell is divided into a central unit (CU) and a distributed unit (DU), the CU handling higher layers comprising a radio resource control (RRC) layer, and the DU handling lower layers comprising the physical layer and the MAC layer,
permitting, by the CU, the DU to determine the handover; and
transmitting, by the DU to the user equipment, the handover command via the first cell in response to determining the handover based on the permitting.

10. The communication method according to claim 1, further comprising:
when a first base station manages the first cell and a second base station manages the second cell,
transmitting a handover request from the first base station to the second base station,
wherein the handover request comprises an L1/L2 handover indicator indicating the handover controlled in a layer 1 (L1) that is the physical layer and/or a layer 2 (L2) comprising the MAC layer.

11. A user equipment used in a mobile communication system, the user equipment comprising:
a receiver configured to receive a handover command from a first cell, the handover command comprising downlink control information (DCI) defined in a physical layer or a medium access control (MAC) control element (CE) defined in a MAC layer; and
a controller configured to control handover to be performed, the handover being for changing a serving cell of the user equipment from the first cell to a second cell in response to receiving the handover command.

12. A base station used in a mobile communication system, the base station comprising:
a transmitter configured to transmit a handover command to a user equipment via a first cell, the handover command comprising downlink control information (DCI) defined in a physical layer or a medium access control (MAC) control element (CE) defined in a MAC layer, and the handover command being for changing a serving cell of the user equipment from the first cell to a second cell.
